# EUROPÄISCHE PATENTSCHRIFT

(11) **EP 2 841 269 B1**
(45) Veröffentlichungstag und Bekanntmachung des Hinweises auf die Patenterteilung: **24.08.2016**
(21) Anmeldenummer: 13723432.4
(22) Anmeldetag: 26.04.2013
(51) Int. Cl.: B32B 37/26, B29C 33/68, B29C 63/00, B29C 37/00, B05D 1/00

(54) **VERBUND MIT TEMPORÄRER SCHUTZFOLIE**
ASSEMBLY WITH TEMPORARY PROTECTIVE FILM
ENSEMBLE COMPRENANT UNE FEUILLE DE PROTECTION TEMPORAIRE

(30) Priorität: 27.04.2012 DE 102012207149
(43) Veröffentlichungstag der Anmeldung: 04.03.2015
(73) Patentinhaber: Fraunhofer Gesellschaft zur Förderung der angewandten Forschung e.V., 80686 München (DE)
(72) Erfinder: VISSING, Klaus-Dieter, 27321 Thedinghausen (Morsum) (DE); OTT, Matthias, 21255 Dohren (DE); GRAßL, Gregor, 21684 Stade (DE)
(74) Vertreter: Eisenführ Speiser
(86) Internationale Anmeldenummer: PCT/EP2013/058705
(87) Internationale Veröffentlichungsnummer: WO 2013/160437

(56) Entgegenhaltungen:
- WO-A1-2007/118905

## Beschreibung

Die Erfindung betrifft einen Verbund, umfassend ein (i) Kunststoffbauteil oder (ii) ein Kunststoffhalbzeug mit einem Schutzschichtsystem, wobei das Schutzschichtsystem eine Kunststofffolie und eine plasmapolymere siliziumorganische Schicht umfasst. Die Erfindung betrifft ferner die Verwendung einer temporären Schutzfolie als Trennhilfe zur Form bzw. zwischen Form und entstehendem Kunstoffbauteil in einem Kunststoffformgebungsprozess und ein Verfahren zum Herstellen eines Verbundes umfassend ein Kunststoffbauteil und eine temporäre Schutzfolie.

Viele hochwertige Kunststoffbauteile, insbesondere Kunststoffformteile und insbesondere Formteile aus faserverstärkten Kunststoffen werden nach ihrer Herstellung mit einer Schutzfolie versehen, um sie zum Beispiel gegen Verschmutzungen oder Beschädigungen während des Transportes zu schützen. Hierzu werden häufig selbstklebende Folien verwendet, um die gewünschte Haftkraft und damit die Gebrauchsfähigkeit einzustellen. Zudem werden zur Entformung von Kunststoffformteilen und insbesondere Formteilen aus faserverstärkten Kunststoffen die Formen im Formgebungsprozess mit externen Trennmitteln ausgestattet. Diese verbleiben nach der Entformung auf dem Kunststoffformteil und auf der Formoberfläche. Dadurch müssen die Formteile und die Formen häufig aufwändig von den Trennmittelrückständen befreit werden, was zu Verlusten in der Oberflächenqualität führt. Aus diesem Grunde werden die Formteile teilweise anschließend sehr aufwändig lackiert.

Bei der Fertigung von Faserverbundbauteilen, beispielsweise mit Hilfe vorimprägnierter Halbzeuge (zum Beispiel vorimprägnierte Fasern (Prepregs), vorimprägniertes Kupfergitter als Blitzschutz), aber auch bei Einsatz nicht-vorimprägnierter Halbzeuge z.B. im Infusionsverfahren, muss gewährleistet werden, dass nach dem thermischen Aushärten des Harzes das Bauteil aus einer Form entnommen werden kann. Zudem müssen die einzelnen Lagen der Prepregs zum Handling bzw. während der Herstellung (auf der Rolle) durch eine Trennschicht, eine Trennfolie voneinander getrennt bzw. von den Werkzeugen separiert werden. Diese Trennfolien oder auch Trennpapiere werden vor dem Einlegen der vorimprägnierten Produkte in die eingetrennte Form entfernt.

In der DE 10 2006 018 491 A1 bzw. WO 2007/118905 A1 [Flexible plasmapolymere Produkte, entsprechende Artikel, Herstellverfahren und Verwendung] wird ein Artikel umfassend oder bestehend aus einem plasmapolymeren Produkt, bestehend aus Kohlenstoff, Silicium, Sauerstoff und Wasserstoff sowie gegebenenfalls üblichen Verunreinigungen, wobei im ESCA-Spektrum des plasmapolymeren Produktes, bei Kalibrierung auf den aliphatischen Anteil des C 1s Peaks bei 285,00 eV, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C, der Si 2p Peak einen Bindungsenergiewert besitzt, der um maximal 0,44 eV zu höheren oder niedrigeren Bindungsenergien verschoben ist, und der O 1s Peak einen Bindungsenergiewert besitzt, der um maximal 0,50 eV zu höheren oder niedrigeren Bindungsenergien verschoben ist, offenbart.

Erwähnt wird, dass wegen der Dehnfähigkeit dieser plasmapolymeren Beschichtung flexible Produkte, wie Folien (insbesondere dehnbare Folien) mit einer entsprechenden Antihaft- bzw. Easy-to-Clean-Oberfläche versehen werden können. Zudem wird erwähnt, dass diese plasmapolymere Beschichtung als Trennschicht oder Teil einer Trennschicht auf einer Formoberfläche verwendet werden kann - ohne dass ein Hinweis darauf gegeben wird, dass durch die entsprechende Beschichtung einer Polymerfolie eine Trennfolie hergestellt werden kann.

Auch wird der Einsatz dieses plasmapolymeren Produktes als rückstandsfrei abziehbare Schutzfolie, insbesondere für eine optische Komponente einer lithographischen Anlage, erwähnt. Hierbei wird erwähnt, dass das plasmapolymere Produkt auch Bestandteil einer Schutzfolie sein kann. Allerdings wird aus dem Beschreibungstext klar, dass mit letzterem eine freitragende plasmapolymere Folie gemeint ist.

In der DE 10 2007 010 071 A1 [Schichtverbund umfassend eine Lack- und eine Trennschicht sowie Lack-Träger-Anordnung zur Übertragung von Lack] wird die Verwendung des plasmapolymeren Produkts nach DE 10 2006 018 491 A1 zur Übertragung von Lack beschrieben. Dabei ist das Einbringen von Lack auf einer derart plasmapolymer beschichteten Trägerfolie in eine Form erwähnt, wobei Fasern und/oder Harz auf die Lackschicht aufgetragen werden und mit dieser beispielsweise durch Aushärtung verbunden werden können. Hierbei wird erwähnt, dass die dehnfähige Folie bei der Entnahme aus der Form noch auf der Trennschicht verbleiben kann. In diesem Falle diene sie noch als zusätzlicher Schutz für die Lackschicht und kann auf Wunsch leicht von dieser entfernt werden. Allerdings offenbart diese Schrift das o.g. plasmapolymere Produkt nur als Transferschicht - beim Abziehen der Folie wird also die plasmapolymere Beschichtung auf dem Lack verbleiben. Dies kann auch unerwünscht sein. In diesem Zusammenhang wird auch erwähnt, dass die Trägerfolie bei der Entnahme aus der Form noch als zusätzlicher Schutz für die Lackschicht auf der Trennschicht verbleiben kann.

In der DE 10 2004 026 479 A1 (Dehäsionsbeschichtung zum Abformen von Oberflächen) wird ebenfalls eine (insbesondere plasmapolymere) Transferbeschichtung, u. a. für Lacke, beschrieben. Hier werden über die Zusammensetzung der plasmapolymeren Beschichtung keine detaillierten Angaben gemacht.

Es hat sich herausgestellt, dass die Verwendung der in der DE 10 2006 018 491 A1 als bevorzugt angegebene Schicht als Trennschicht auf einer flexiblen Folie zu einer Trennfolie führt, die eine zu verbessernde Haftung für eine temporäre Schutzfolie liefert, denn ihre Haftkraft ist für die Verwendung als Schutzfolie zu gering

Aufgabe der vorliegenden Erfindung war es daher, ein Folienprodukt anzugeben, welches gleichzeitig als thermisch stabile Trennfolie als auch als Schutzfolie im Bereich der Kunststoffverarbeitung mit definierter Haftung zum Bauteil genutzt werden kann. Insbesondere sollte bevorzugt die Schutzfolie rückstandsfrei von einem (ausgehärteten) Kunststoffbauteil oder Kunststoffhalbzeug entfernt werden können, aber gleichzeitig eine so große Haftung aufweist, dass sie ähnlich genutzt werden kann, wie ein selbstklebende Folie. Ferner ist es bevorzugt, dass die Schutzfolie auch als Trennhilfe im Formgebungsverfahren, also als Trennhilfe zwischen Form und entstehendem Kunststoffbauteil eingesetzt werden kann.

Erfindungsgemäß wird diese Aufgabe gelöst durch einen Verbund umfassend (i) ein Kunststoffbauteil oder (ii) ein Kunststoffhalbzeug mit einem Schutzschichtsystem, wobei das Schutzschichtsystem eine Kunststofffolie und eine plasmapolymere siliziumorganische Schicht umfasst, die plasmapolymere siliziumorganische Schicht zwischen dem (i) Kunststoffbauteil oder dem (ii) Kunststoffhalbzeug und der Kunststofffolie angeordnet ist und die plasmapolymere siliziumorganische Schicht nach dem Aushärten (i) des Kunststoffbauteils oder des (ii) Kunststoffhalbzeugs an der Kunststofffolie fester haftet als an dem (i) Kunststoffbauteil oder dem (ii) Kunststoffhalbzeug und wobei die plasmapolymere siliziumorganische Schicht Stoffmengenverhältnisse aufweist, wie im Anspruch 1 definiert.

Bei dem Schutzschichtsystem handelt es sich dabei um eine Schutzfolie, bei der durch eine plasmapolymere siliziumorganische Schicht, die zum Substrat (Kunststoffbauteil oder Kunststoffhalbzeug) hin angeordnet ist, die Haftkraft zum Substrat so eingestellt ist, dass ein rückstandsfreies Trennen nach dem Aushärten des Kunststoffbauteils des Kunststoffhalbzeugs erfolgen kann.

Bevorzugte plasmapolymere siliziumorganische Schichten umfassen in diesem Zusammenhang einen Kohlenstoffanteil von wenigstens 2,5 Atom-%, gemessen mit XPS an der vom Substrat abgewandten Seite und bezogen auf die Elemente N, C, Si und O in der Schicht als 100 Atom-%

In diesem Anmeldungstext bedeutet ein Kunststoffhalbzeug ein Kunststoffprodukt, welches noch nicht vollständig ausgehärtet ist. Es kann daher noch in seiner Form verändert, bevor es einem Aushärteprozess, z.B. durch Wärme oder Strahlung zugeführt wird. Danach ist es ein Kunststoffbauteil im Sinne von (i).

Unter dem Zustand "nach dem Aushärten" ist zu verstehen, dass das Kunststoffbauteil oder ein Bauteil, das aus Kunststoffhalbzeug gefertigt wurde, im üblichen gebrauchsfertigen Zustand ist. Dabei erfolgt das Aushärten bevorzugt thermisch. Das Aushärten erfolgt dabei materialangepasst so, dass das Material nicht in seiner Gebrauchsfähigkeit geschädigt wird, z.B. durch übermäßiges Verspröden.

Es hat sich überraschend herausgestellt, dass es möglich ist, einen erfindungsgemäßen Verbund so auszugestalten, dass das Schutzschichtsystem aus plasmapolymerer siliziumorganischer Schicht und Kunststofffolie, das gemeinsam die Schutzfolie bildet, von einem Kunststoffbauteil oder von einem Kunststoffbauteil, das aus Kunststoffhalbzeug hergestellt wurde, weitestgehend rückstandsfrei abzuziehen. Hier hat sich insbesondere herausgestellt, dass das System so gestaltbar ist, dass die plasmapolymere siliziumorganische Schicht die gewünschten Eigenschaften der Schutzfolie, die von der Kunststofffolie her stammen, nicht oder allenfalls unwesentlich einschränkt. Solche Eigenschaften sind beispielsweise Wickelbarkeit und Tiefziehfähigkeit.

Eine plasmapolymere Schicht wird dabei nach üblichem Plasmapolymerverfahren aus der Gasphase bevorzugt auf die Kunststofffolie abgeschieden. Ganz besonders bevorzugt ist in diesem Zusammenhang, dass die plasmapolymere Schicht mit Hilfe von siloxanhaltigen Verbindungen als Precursoren, am meisten bevorzugt mit Hexamethyldisiloxan (HMDSO) hergestellt wird.

Zur weiteren Information über plasmapolymere Schichten und insbesondere bevorzugte plasmapolymere Schichten sei auf die oben erwähnte Anmeldung DE 10 2007 010 071 A1 verwiesen, hier insbesondere auf die Seite 6, erster Absatz.

Ferner ist es generell bevorzugt, dass die plasmapolymere siliziumorganische Zwischenschicht zunächst auf die Kunststofffolie aufgebracht wird. Dieses kann - wiederum bevorzugt - in einem Bahnwarenbeschichtungsprozess erfolgen. So ist es möglich, mittels der plasmapolymeren siliziumorganischen Schicht in wirtschaftlicher Weise das Haftungsverhalten (bzw. das Enthaftungsverhalten) der eingesetzten Kunststofffolie auf dem zu schützenden Kunststoff (Kunststoffbauteil oder Kunststoffhalbzeug) einzustellen.

Wie bereits oben beschrieben, sind die Haftungsverhältnisse so eingestellt, dass nach dem Aushärten das Schutzschichtsystem (weitestgehend) rückstandsfrei von dem Kunststoffbauteil abgezogen werden kann, d.h. es findet ein Adhäsionsbruch zwischen dem ausgehärteten Polymersystem und der plasmapolymeren siliziumorganischen Schicht bei einer mechanischen Enthaftung statt.

Erfindungsgemäß ist ein erfindungsgemäßer Verbund, wobei die Stoffmengenverhältnisse gemessen mittels XPS (bevorzugt an der von der Kunststofffolie abgewandten Seite der siliziumorganischen Schicht)

| | | |
|---|---|---|
| 1,00 | ≤ n(O + N) : n(Si) | ≤ 2,20 |
| 1,20 | ≤ n(C) : n(Si) | ≤ 2,00 |
| 0,70 | ≤ n(C) : n(O + N) | ≤ 2,00 |

sind und bevorzugt

| | | |
|---|---|---|
| 1,25 | ≤ n(O) : n(Si) | ≤ 2,10 |
| 1,60 | ≤ n(C) : n(Si) | ≤ 2,00 |
| 0,80 | ≤ n(C) : n(O) | ≤ 1,80 |

sind.

Die Messung mittels XPS (X-ray Photoelectron Spectroscopy) bzw. ESCA (Electron Spectroscopy for Chemical Analysis) wird im Zweifelsfall in einem Gerät durchgeführt, wie im Beispiel 2 dieser Anmeldung angegeben.

Im Bereich der genannten Stoffmengenverhältnisse lassen sich besonders effektive plasmapolymere siliziumorganische Zwischenschichten zur Trenneigenschafteinstellung erzeugen. Dabei ist es auch möglich, dass die besonders bevorzugten Stoffmengenverhältnisbereiche für einzelne Elementpaarungen mit den einfach bevorzugten kombiniert werden.

Bevorzugt besteht die plasmapolymere siliziumorganische Schicht zu ≥ 90 Atom-% aus den Elementen C, Si, O und N, wobei Wasserstoff nicht mitgemessen wird und die Analyse mittels XPS erfolgt. Weiter bevorzugt besteht die plasmapolymere siliziumorganische Schicht zu ≥ 95 Atom-% und ganz besonders bevorzugt zu ≥ 99 Atom-% aus diesen Elementen, wobei die Analyse mittels XPS erfolgt und Wasserstoff nicht mitgezählt wird.

Bevorzugt ist ein erfindungsgemäßer Verbund, bei dem bezogen auf die Summe der Elemente Silicium, Sauerstoff, Stickstoff und Kohlenstoff als 100 Atom-% für die plasmapolymere siliziumorganische Schicht gemessen mittels XPS gilt:

| | |
|---|---|
| Silicium | 17 bis 27 Atom-% |
| (Sauerstoff + Stickstoff) | 26 bis 50 Atom-% |
| Kohlenstoff | 25 bis 50 Atom-% |

und bevorzugt gilt:

| | |
|---|---|
| Silicium | 19 bis 26 Atom-% |
| Sauerstoff | 30 bis 45 Atom-% |
| Kohlenstoff | 33 bis 48 Atom-% |

Dabei erfolgt die Messung bevorzugt auf der von der Kunststofffolie abgewandten Seite.

Es hat sich herausgestellt, dass in diesen absoluten Stoffmengenbereichen besonders geeignete plasmapolymere siliziumorganische Schichten für die Anwendung in dieser Erfindung bestehen.

Erfindungsgemäß bevorzugt ist ein Verbund, wobei die plasmapolymere siliziumorganische Schicht eine Schichtdicke von ≤ 2 µm, bevorzugt ≤ 0,5 µm und besonders bevorzugt ≤ 0,2 µm besitzt.

Mit diesen Schichtdicken lassen sich die Trenneigenschaften in der Kunststofffolie gut beeinflussen, ohne deren mechanischen Eigenschaften im Sinne des Einsatzzweckes negativ zu beeinflussen.

Erfindungsgemäß bevorzugt ist ein erfindungsgemäßer Verbund, wobei die Kunststofffolie besteht aus einem thermoplastischen Elastomer, bevorzugt ausgewählt aus der Gruppe bestehend aus
- einem thermoplastischen Elastomer, bevorzugt ausgewählt aus der Gruppe bestehend aus thermoplastische Polyesterelastomere (TPE-E); thermoplastische Copolyester(TPC), insbesondere Polyetherester; vernetzte thermoplastische Elastomere auf Olefinbasis (TPE-V / TPV), insbesondere Mischungen aus Polypropylen und Ethylen-Propylen-Dien-Kautschuk (EPDM/PP); thermoplastische Elastomere auf Urethanbasis (TPE-U / TPU); Mischungen aus Naturkautschuk und Polypropylen (NR/PP); Mischungen aus Nitrilkautschuk und Polypropylen (NBR/PP) und Mischungen aus Ethylenvinylacetat und Polyvinylidenchlorid (EVA/PVDC) oder
- einem thermoplastischen Polymer, bevorzugt ausgewählt aus der Gruppe bestehend aus Polyolefin, insbesondere Polymethylpenten (PMP) sowie Polyolefin-Copolymeren; Polyamid, insbesondere Polyamid 6.6 sowie ε-Caprolactam; Polyethylenterephthalat (PET) und Polyimid (PI).

Diese Folien sind je nach Einsatzzweck besonders gut geeignet, eine Schutzwirkung zu entfalten.

In diesem Zusammenhang ist es besonders bevorzugt, dass das erfindungsgemäße Schutzschichtsystem wickelbar und/oder tiefziehfähig ist. Weiter besonders bevorzugt ist das erfindungsgemäße Schutzschichtsystem auch bei Raumtemperatur (vakuum-) tiefziehfähig.

"Tiefziehfähig" bedeutet im Sinne dieses Textes eine Bruchspannung bei 50 % Dehnung von weniger als 50 MPa und eine Bruchdehnung von mindestens 150 % (gemessen nach DIN EN ISO 527).

"Wickelbar" bedeutet in diesem Zusammenhang, dass das Schutzschichtsystem auf eine Rolle mit einem Durchmesser von ≤ 30 cm, bevorzugt ≤ 20 cm und besonders bevorzugt ≤ 10 cm aufgewickelt werden und in diesem Zustand wenigstens 24 Stunden verbleiben kann, ohne dass eine wesentliche Einbuße der mechanischen Qualitäten des Schutzschichtsystems und insbesondere dass eine dauerhafte Verformung eintritt.

Erfindungsgemäß bevorzugt ist ein Verbund, wobei das (i) Kunststoffbauteil oder (ii) Kunststoffhalbzeug zumindest auf der zur plasmapolymeren siliziumorganischen Schicht gerichteten Seite bevorzugt vollständig aus einem Material besteht, ausgewählt aus der Gruppe bestehend aus Duromer; Thermoplast; Matrixharz für Faserverbundkunststoffe (ausgehärtet für (i), nicht ausgehärtet für (ii)), insbesondere auf Epoxidharz-, Polyurethanharz-, Polyesterharz-, Vinylesterharz- oder Phenolharzbasis; Kunststoffschaum; Lack insbesondere appliziert als Gelcoat; und Klebstoff.

Die bevorzugten Materialien für das Kunststoffbauteil eignen sich in besonderer Form für den Einsatz in Kombination mit dem erfindungsgemäßen Schutzschichtsystem.

Weiter bevorzugt ist ein erfindungsgemäßer Verbund, umfassend ein Kunststoffbauteil wobei das Kunststoffbauteil hergestellt ist nach einem Verfahren ausgewählt aus der Gruppe bestehend aus Spritzgießen; Reaction Injection Moulding (RIM); Schäumen; Verfahren zur Herstellung von Faserverbundwerkstoffen, insbesondere auf Basis von Kohlenstofffasern, Glasfasern, andere anorganische Fasern oder Polymerfasern, bevorzugt (Vakuum-)Infusion, Handlaminieren, Injektionsverfahren besonders bevorzugt Resin Transfer Moulding RTM, Nasspressverfahren, Faserspritzen, Prepregverfahren; in-Mould-Lackieren und Laminieren insbesondere zum Verbund mit Holz, Metall oder Kunststoff.

Es hat sich gezeigt, dass das erfindungsgemäß einzusetzende Schutzschichtsystem aus Kunststofffolie und siliziumorganischer Schicht in einer Vielzahl von Kunststoffformanwendungen eingesetzt werden kann. Hierbei hat sich als besonders vorteilhaft erwiesen, dass - bei geeigneter Materialwahl - das Schutzschichtsystem in die entsprechenden Formen für das Kunststoffformverfahren eingelegt werden kann (ggf. über Tiefziehen angepasst werden kann), so dass der Einsatz eines Trennmittels auf der Formoberfläche nicht mehr erforderlich ist. Trotzdem ist es auch möglich, Trenn- oder Gleitmittel einzusetzen, die zumindest im Bereich des Bauteils nicht mehr gesondert abgereinigt werden müssen, da diese beim Entfernen der Schutzfolie mitentfernt werden würden und die Folie einen Übertrag auf das Bauteil verhindert.

Besonders bevorzugt ist dabei der Einsatz eines erfindungsgemäßen Verbundes für das sog. Prepreg-Verfahren und auf einem Blitzschutz-Matrix-Verbund bevorzugt einem Kupfer-Matrix-Verbund.

Bevorzugt ist ein erfindungsgemäßer Verbund, wobei die Kunststofffolie eine Erweichungstemperatur von ≥ 100° C, bevorzugt ≥ 140° C, weiter bevorzugt ≥ 180° C besitzt.

Durch eine verhältnismäßig hohe Erweichungstemperatur ist die Kunststofffolie (auch in Kombination mit der siliziumorganischen Schicht) besonders geeignet für Kunststoffformverfahren, bei denen der Kunststoff Hitze ausgesetzt wird.

Erfindungsgemäß bevorzugt ist ein erfindungsgemäßer Verbund, umfassend ein Kunststoffhalbzeug, das noch nicht vollständig ausgehärtet ist.

Bei diesem Material, insbesondere beim Material für das sog. Prepreg-Verfahren, wird Kunststoffhalbzeug als Bahnware geliefert. Die erfindungsgemäße Schutzschicht kann dabei die einzelnen Schichten der Bahnware voneinander trennen (z.B. im aufgewickelten Zustand) und somit vor unerwünschten Verklebungen schützen. Beim Herstellen von Kunststoffformteilen aus diesem Halbmaterial ist es möglich, dass die untere Schicht, des in die Form eingeführten Materials, weiterhin mit der Folie versehen bleibt, so dass die Folie eine Trennwirkung gegenüber der Form ausüben kann. Selbstverständlich ist es sinnvoll, nur den Kontaktbereich des Halbzeugs mit der Form von dem erfindungsgemäßen Schutzschichtsystem bedecken zu lassen, während zwischen den Lagen des Halbzeugs, die miteinander zu dem fertigen Kunststoffformteil verschmolzen werden sollen, selbstverständlich das Schutzschichtsystem vor dem Aushärtungsprozess entfernt werden muss.

Bevorzugt ist ein erfindungsgemäßer Verbund, wobei der Verbund eine Bahnware, bevorzugt eine wickelbare Bahnware ist.

Zur Definition von "wickelbar" wird auf die obige Definition verwiesen.

Bevorzugt ist dabei, dass der erfindungsgemäße Verbund ein Kunststoffhalbzeug umfasst, das noch nicht vollständig ausgehärtet ist.

Ein solches Kunststoffhalbzeug kann z.B. in Prepreg-Verfahren eingesetzt werden und somit entwickelt der erfindungsgemäße Verbund eine Reihe von besonderen Vorteilen, wie gute Handhabbarkeit und Einsatzmöglichkeit in Formgebungsverfahren ohne besondere Trennhilfe.

Erfindungsgemäß bevorzugt ist ein erfindungsgemäßer Verbund, wobei das Material für den Kunststoff ein Faserverbundkunststoff ist. Mit diesem Material lassen sich Kunststoffformteile mit hoher spezifischer Festigkeit herstellen.

Erfindungsgemäß bevorzugt ist ferner ein erfindungsgemäßer Verbund, wobei der Verbund eine an die plasmapolymere siliziumorganische Schicht angrenzende Lackschicht umfasst.

Eine solche Lackschicht kann mit dem Kunststoffmaterial für das Kunststoffformteil gemeinsam ausgehärtet werden und verbleibt nach dem Abziehen des Schutzschichtsystems auf dem entstandenen Kunststoffbauteil, so dass dieses bereits lackiert vorliegt.

Bevorzugt ist ein erfindungsgemäßer Verbund, wobei das Schutzschichtsystem mit einer Haftkraft von ≥ 0,01 N/cm, bevorzugt ≥ 0,25 N/cm, weiter bevorzugt ≥ 0,35 N/cm und/oder ≤ 4 N/cm, bevorzugt ≤ 3 N/cm und besonders bevorzugt ≤ 2,5 N/cm in einem 180°-Abschältest mit einer Schälgeschwindigkeit von ca. 120 cm/min, bevorzugt so wie in Beispiel 4 beschrieben, von dem ausgehärteten Kunststoffbauteil oder dem ausgehärteten Kunststoffhalbzeug gelöst werden kann. Dabei wird zur Erlangung einer relativ starken Haftung der Kunststofffolie eine Beschichtungszusammensetzung ausgewählt, die einen innerhalb der oben angegebenen Grenzen einen relativ hohen Gehalt an Sauerstoff im Vergleich zu dem Gehalt an Kohlenstoff aufweist, wie die im Beispiel aufgeführte Beschichtung 3. Hingegen wird zur Erlangung einer relativ geringen Haftung der Verbundfolie eine Beschichtungszusammensetzung für die plasmapolymere siliziumorganische Schicht ausgewählt, die einen innerhalb der oben angegebenen Grenzen einen relativ geringen Gehalt an Sauerstoff im Vergleich zu dem Gehalt an Kohlenstoff aufweist, wie die im Beispiel aufgeführte Beschichtung 1 (siehe unten).

Teil der Erfindung ist auch die Verwendung eines Schutzschichtsystems aus Kunststofffolie und plasmapolymerer siliziumorganischer Schicht, insbesondere in seinen oben beschriebenen bevorzugten Ausgestaltungsformen, als Trennhilfe zur Form in einem Kunststoffformgebungsprozess.

Durch diese Verwendung lassen sich Trennmittel einsparen, ebenso wie aufwändige Säuberungsschritte für die Form und die geformten Bauteile.

Teil der Erfindung ist ferner ein Verfahren zum Herstellen eines erfindungsgemäßen Verbundes, umfassend die Schritte:
a) Bereitstellen einer Kunststofffolie, wie oben definiert,
b) Beschichten der Kunststofffolie mit einer plasmapolymeren siliziumorganischen Schicht, wie oben definiert, und
c) Kontaktieren des Materials für das i) Kunststoffbauteil oder ii) das Kunststoffhalbzeug im nicht vollständig ausgehärteten Zustand mit der plasmapolymeren siliziumorganischen Schicht.

Dabei ist es bevorzugt, dass die Kunststofffolie zunächst mit der siliziumorganischen Schicht beschichtet, bevor das Material für das Kunststoffbauteil bzw. das Kunststoffhalbzeug auf die plasmapolymere siliziumorganische Schicht aufgebracht wird.

In einer besonderen Ausgestaltung der Erfindung wird dann zunächst ein Lack auf das (bevorzugt tiefziehfähige) Schutzschichtsystem gegeben, dieser ggf. teilausgehärtet und anschließend mit dem eigentlichen Kunststoffmaterial für das Kunststoffbauteil oder das Kunststoffhalbzeug in Verbindung gebracht. Wie bereits oben angedeutet, ist es möglich, den Lack gemeinsam mit dem Kunststoffmaterial für das Bauteil auszuhärten. Dabei ist es besonders bevorzugt, dass die Kombination aus Schutzschichtsystem, ggf. Lack und Material für das Kunststoffbauteil bzw. das Kunststoffhalbzeug (Matrixmaterial) gemeinsam eine (wickelbare) Bahnware darstellt, bei der das Matrixmaterial beispielsweise thermisch ausgehärtet werden kann, z.B. nach Einlegen in eine entsprechende Form.

Es ist für den Fachmann selbstverständlich, dass der erfindungsgemäße Schutzschichtverbund so lange bestehen kann, bis das (ausgehärtete) Kunststoffbauteil an seiner Funktionsstelle ist. Somit kann das Schutzschichtsystem das Bauteil während des Transportes und des Handlings schützen und zum spätestmöglichen Zeitpunkt vom Bauteil abgezogen werden.

Nachfolgend wird die Erfindung mittels Beispielen näher erläutert:

### Beispiele

### Beispiel 1

### Herstellung von erfindungsgemäß einzusetzenden Schutzschichtsystemen

Zur Herstellung des erfindungsgemäß einzusetzenden (temporären) Schutzschichtsystems wurde die thermoplastische Polyurethanfolie Walopur 2102 AK 050 von Epurex Films in einem 3 m³ Plasma-Reaktor mit einer plasmapolymeren Beschichtung versehen. Dabei wurde die 1600 mm breite und 50 µm dicke Folie mit einem Abstand von ca. 40 mm vor zwei gekühlten Flächenelektroden mit einer Fläche von jeweils 500 mm (entlang der Bahnrichtung) x 2300 mm geführt. Während der Beschichtung wurden die nachfolgenden Plasma-Prozessparameter eingestellt:

**Tabelle 1: Prozessparameter**

| | **Beschichtung 1** | **Beschichtung 2** | **Beschichtung 3** |
|---|---|---|---|
| Gasfluss O₂ (Sccm): | 250 | 350 | 450 |
| Gasfluss HMDSO (Sccm): | 250 | 175 | 150 |
| Leistung (W): | 4500 | 4500 | 5500 |
| Bahngeschwindigkeit (m/min) | 2,5 | 2,5 | 2,5 |
| Druck (mbar): | 0,021 | 0,02 | 0,025 |

Vor der Durchführung wurde sichergestellt, dass die Leckrate (äußere Lecks) der benutzten Vakuumkammer deutlich kleiner als 2 × 10⁻¹ mbar L / s ist. Es wurde mit einer Frequenz von 13,56 MHz gearbeitet.

### Beispiel 2

### XPS-Messungen

Die XPS-Messungen (ESCA-Messungen) wurden mit dem Spektrometer Escalab der Firma VG durchgeführt. Die Kalibrierung des Messgerätes wurde so vorgenommen, dass der aliphatische Anteil des C 1s Peaks bei 285,00 eV liegt. Aufgrund von Aufladungseffekten war es notwendig, die Energieachse ohne weitere Modifikation auf diesen Fixwert zu verschieben. Die Analysekammer war mit einer Röntgenquelle für monochromatisierte Al Kα-Strahlung, einer Elektronenquelle als Neutralisator und einem Quadrupolmassenspektrometer ausgerüstet. Weiterhin verfügte die Anlage über eine magnetische Linse, welche die Photoelektronen über einen Eintrittsschlitz in einen Halbkugelanalysator fokussierte. Während der Messung zeigte die Oberflächennormale auf den Eintrittsschlitz des Halbkugelanalysators. Die Passenergie betrug bei der Bestimmung der Stoffmengenverhältnisse jeweils 80 eV. Bei der Bestimmung der Peak-Parameter betrug die Passenergie jeweils 20 eV.

Es zeigte sich, dass die Messergebnisse im Rahmen der Messungenauigkeit als gleich angesehen werden können, unabhängig davon, ob die Beschichtung auf der temporären Schutzfolie oder auf Siliciumwafern als Referenzmaterial gemessen wurden. Hier werden die Ergebnisse auf Wafern gezeigt:

**Tabelle 2: Ergebnisse der XPS-Messungen**

| | **O (at%)** | **C (at%)** | **Si (at%)** | **N (at%)** | **O/Si** | **C/Si** | **C/O** |
|---|---|---|---|---|---|---|---|
| **Beschichtung 1** | 32,1 | 44,6 | 23,3 | 0 | 1,38 | 1,91 | 1,39 |
| **Beschichtung 2** | 40,8 | 37,6 | 21,4 | 0,2 | 1,91 | 1,76 | 0,92 |
| **Beschichtung 3** | 41,2 | 37,8 | 20,8 | 0,2 | 1,98 | 1,82 | 0,92 |

### Beispiel 3

### Tiefziehfähigkeit

Zur Ermittlung der Tiefziehfähigkeit wurden Folienabschnitte aus Beispiel 1 in einer offenen Form bei Raumtemperatur mit Vakuum-Unterstützung bis zu einer Dehnung von 250% tiefgezogen und anschließend Gelcoat der Firma Bergolin mit der nachfolgenden Zusammensetzung aufgebracht und bei Raumtemperatur ca. 3 Stunden ausgehärtet:
- Steodur PUR GELCOAT Handmasse 6D970-5015-1; 50g
- Steodur PUR HARDNER 7D202; 30g
- Steodur PUR Beschleuniger Blau 6D972-0000; ∼1,5ml

Anschließend konnten die Folienabschnitte mit den 3 Beschichtungen problemlos abgezogen werden. Dies galt sogar für die Bereiche mit einer Dehnung von 250%.

### Beispiel 4

### Haftung

Zur Abschätzung der Haftkräfte wurden die beschichteten Folien aus Beispiel 3 zudem mit dem 2-K-Epoxid-Klebstoff 2011 Araldite 2000+ der Firma Huntsman auf einen Glasobjektträger geklebt (Klebfuge: 1 mm). Nach 4 Tagen Aushärtung bei Raumtemperatur wurde ein 20 mm breiter Streifen der Folie seitlich eingeschnitten und mit einer Federwaage in einem 180°-Winkel mit einer Geschwindigkeit von ca. 120 cm/min abgeschält. Hierfür mussten folgende Kräfte aufgewandt werden:
Beschichtung 1: ca. 0,09 N
Beschichtung 2: ca. 0,14 N
Beschichtung 3: ca. 0,12 N

Als Vergleich wurde die gleiche Polymerfolie auch mit einer Beschichtung nach DE 10 2006 018 491 A1 ausgestattet. Hierbei konnte die Folie mit einer Kraft von lediglich 0,02 N abgezogen werden, während für die unbeschichtete Folie eine Kraft von mehr als 10 N verwendet werden musste, wobei es beim Abziehen auch zu einer starken plastischen Verformung der Folie kam.

Zur Abschätzung der Haftkräfte gegenüber einem Epoxy- Harz (Cycom 977-2) wurden Musterplatten aus vier Lagen des Gewebe-Prepregs 977-2A-35-6KHTA-5H-370-T2 der Firma Cytec auf der beschichteten Folie aus Beispiel 3 im Autoklaven bei 180 °C unter 8 bar Überdruck ausgehärtet. Hierfür wurden eine Aufheizrate von 4 K/min und eine Abkühlrate von 5 K/min gewählt. Dazwischen wurde die Temperatur zwei Stunden lang auf 180 °C gehalten. Nach dem Abkühlen auf Raumtemperatur wurde ein 25 mm breiter Streifen der Folie seitlich eingeschnitten und mit einer Federwaage in einem 180°-Winkel mit einer Geschwindigkeit von ca. 120 cm/min in beziehungsweise senkrecht zur Faserrichtung abgeschält. Hierfür mussten folgende Kräfte aufgewandt werden:
Beschichtung 1: ca. 0,03 N
Beschichtung 2: ca. 0,13 N
Beschichtung 3: ca. 0,45 N

Als Vergleich wurde die gleiche Polymerfolie auch mit einer Beschichtung nach DE 10 2006 018 491 A1 ausgestattet. Hierbei konnte die Folie mit einer Kraft von lediglich 0,01 N abgezogen werden, während für die unbeschichtete Folie nicht von dem ausgehärteten Prepreg-Platten abgezogen werden konnte. Sie wurde stattdessen auseinandergerissen.

Die Polymerfolie mit der erfindungsgemäßen Beschichtung haftet einerseits so gering an dem Formteil, dass sie ohne Probleme (insbesondere ohne Risse in der Polymerfolie) von dem gehärteten Formteil abgezogen werden kann. Andererseits haftet sie so gut, dass sie das Formteil wirksam schützt und dieses mit der erfindungsgemäßen Schutzfolie gelagert, transportiert oder auch mechanisch bearbeitet werden kann.

In der Ausgestaltung der Erfindung, bei der Außenflächen von Halbzeugen zur Fertigung von Faserverbundbauteilen (insbes. Prepregs) mit der Trennfolie ausgerüstet werden, wird zudem ein zusätzlicher Handhabungsaufwand durch das Auslegen/Aufspannen einer Trennfolie in/auf die Form vor dem Aufbau der Prepreg-Lagen bzw. des Surface Masters eingespart. Dies ist aufgrund der Haftungsverhältnisse im Schichtverbund möglich.

### Beispiel 5

### Glasfaser-Verbundbauteil (Rotorblatt), hergestellt mit Infusions-Technologie inklusive Inmould-Lackierung

Vor der Fertigung einer GFK-Außenhaut eines Rotorblattes für Windenergieanlagen mit Hilfe der Infusions-Technologie wird die Form anstatt mit einem flüssigen Trennmittel mit einer 40 µm dicken TPU-Folie, welche zuvor auf der der Form abgewandten Seite als Bahnware in einem Niederdruck-Plasmaprozess mit 20 nm der Beschichtung 2 aus Beispiel 1 ausgestattet worden war, umspannt. Diese Folie wird anschließend in die Form tiefgezogen und es wird als Decklack ein Gelcoat auf Polyurethanbasis appliziert. Der Decklack wird direkt nach der Applikation mit IR-Trocknern leicht vorgetrocknet und darauf die Glasfaser-Gelege sowie die weiteren Fertigungselemente platziert. Nach dem üblichen Vakuumaufbau wird das Fasermaterial evakuiert und das epoxy-basierte Matrixharz injiziert. Das GFK-Bauteil wird nun wie üblich durch Erwärmen ausgehärtet und anschließend mit der TPU-Folie aus der Form entnommen. Die Folie verbleibt als Oberflächenschutz bis nach dem Transport zur Windenergieanlage weitestgehend auf dem Decklack. Vor der Montage wird die Folie (z.B. per Hand) abgezogen. Dabei verbleibt die Beschichtung 2 aus Beispiel 1 vollständig auf der Folie. Die Oberflächenstruktur der matten TPU-Folie sorgt für eine matte Oberfläche auf der ausgehärteten Rotorblatt-Außenhaut.

### Beispiel 6

### Wickeltechnik

Mit Hilfe der Wickeltechnik werden Kohlenstofffasern (Carbonfasern), die während des Wickelvorgangs mit einem epoxy-basierten Matrixharz benetzt wurden, geformt und anschließend in einem Autoklaven ausgehärtet. Für eine trennmittelfreie Entformung wird vor dem Wickeln ein 60 µm dicker Kunststoffschlauch aus TPC, welcher zuvor außen in einem Bahnwaren-Niederdruck-Plasmaprozess mit der Beschichtung 3 aus Beispiel 1 versehen worden war, auf den Kern gezogen. Nach dem Wickeln wird von außen ein 60 µm dicker TPC-Schlauch, welcher zuvor außen in einem Bahnwaren-Niederdruck-Plasmaprozess mit der Beschichtung 3 aus Beispiel 1 versehen worden war, über die Fasern gezogen. Dabei wird die Außenseite des Schlauches allerdings nach innen gestülpt. Dieser zweite Schlauch verfügt über regelmäßige Löcher, durch die überschüssiges Harzmaterial beim Aushärten entweichen kann. Nach dem üblichen Aushärten verbleiben die Schläuche zunächst noch als Oberflächenschutz auf dem CFK-Bauteil und werden erst bei Bedarf per Hand abgezogen. Dabei verbleibt die Beschichtung 3 komplett auf der TPC-Folie. Die CFK-Oberfläche ist sauber und frei von Trennmitteln und kann daher beispielsweise ohne Probleme lackiert werden.

### Beispiel 7

### Kohlenstofffaser-Verbundbauteil, hergestellt mit der Prepreg-Technologie

Mit Hilfe der Prepreg-Technologie werden vorimprägnierte Kohlenstofffasern, die nach Ihrer Herstellung mit einem epoxy-basierten Matrixharz benetzt wurden, manuell (Handlamieren) oder maschinell (z.B. Tapelegen, Fiberplacement) auf bzw. in eine Form mit erfindungsgemäß einzusetzender Trennfolie (Polymerfolie, Schutzfolie) (ab-)gelegt und anschließend in einem Autoklaven ausgehärtet. Diese vorimprägnierten Halbzeuge müssen gekühlt (i.d.R. <-18°C) gelagert werden, um eine vorzeitig beginnende Aushärtung des Matrixharzes zu unterbinden. Für eine Entformung ohne Einsatz von zusätzlichen externen oder internen Trennmitteln wird eine 60 µm TPU-Folie, welche zuvor auf der der Form abgewandten Seite als Bahnware in einem Niederdruck-Plasmaprozess mit 50 nm der Beschichtung 2 aus Beispiel 1 ausgestattet worden war, in die Form tiefgezogen, so dass diese faltenfrei auf der Formoberfläche aufliegt. Das anschließende Ablegen der Prepreglagen erfolgt derart, dass die erste Lage auf der zuvor tiefgezogenen beschichteten Schutzfolie zu liegen kommen. Als hilfreich hat sich dabei, insbesondere bei der Ablage der ersten 1-2 Prepreglagen, eine (temporäre) umlaufende Fixierung der Schutzfolie erwiesen. Nach dem Ablegen der letzten Prepreglage erfolgt der übliche Vakuumaufbau sowie das übliche Aushärten im Autoklaven. Nach dem Entformen verbleibt die TPU-Folie zunächst noch als Oberflächenschutz auf dem CFK-Bauteil und wird erst bei Bedarf abgezogen. Dabei verbleibt die Beschichtung 2 komplett auf der TPU-Folie. Die CFK-Oberfläche ist sauber und frei von Trennmitteln und kann daher beispielsweise ohne Probleme lackiert werden.

### Beispiel 8

### Vorimprägnierte Halbzeuge zur Fertigung von Faserverbundbauteilen: Blitzschutz-Halbzeuge

Für die Fertigung eines Faserverbund-Außenhaut-Bauteiles mit Hilfe von vorimprägnierten Blitzschutz-Halbzeugen (Kupfergitter) wird das mit einem Epoxidharz vorimprägnierte Kupfergitter mit einer 60 µm dicken TPU-Folie, welche zuvor auf der zum vorimprägnierte Kupfergitter gewandten Seite als Bahnware in einem Niederdruck-Plasmaprozess mit 60 nm der Beschichtung 2 aus Beispiel 1 ausgestattet worden war, auf eine Rolle gewickelt. Dieses vorimprägnierte Kupfergitter wird anschließend mit der Folie in die Form manuell oder maschinell abgelegt. Ein gegebenenfalls erforderlicher Überlapp benachbarter Bahnen (Garantie der elektrischen Stromleitung) wird dadurch gewährleistet, dass entweder die Folie des überlappende Randbereichs auf der oberen Bahn direkt vor dem Einlegen abgezogen wird oder dieser Randbereich nicht mit dieser Folie ausgestattet wird. Auf dem Blitzschutz-Halbzeug werden nun wie üblich mehrere Lagen Prepreg abgelegt. Nach der üblichen Autoklavaushärtung erfolgt eine saubere Entformung der Faserverbund-Außenhaut inkl. der temporären Schutzfolie aus der Form. Die temporäre Schutzfolie verbleibt zunächst noch als Oberflächenschutz auf dem CFK-Bauteil und wird erst bei Bedarf abgezogen.

### Beispiel 9

### Vorimprägnierte Halbzeuge zur Fertigung von Faserverbundbauteilen: Faser-Gelege

Für die Fertigung eines Faserverbund-Bauteiles mit wird unidirektionalem Epoxidharz-Prepreg mit einer 60 µm dicken TPU-Folie, welche zuvor auf der zum Prepreg gewandten Seite als Bahnware in einem Niederdruck-Plasmaprozess mit 30 nm der Beschichtung 2 aus Beispiel 1 ausgestattet worden war, auf eine Rolle gewickelt. Dieses Prepreg wird anschließend als erste Lage mit der Folie maschinell auf Stoß in eine Form abgelegt. Auf dieser ersten Lage werden nun wie üblich weitere Lagen Prepreg ohne die Folie abgelegt. Nach der üblichen Autoklavaushärtung erfolgt eine saubere Entformung der Faserverbund-Außenhaut inkl. der temporären Schutzfolie aus der Form. Die temporäre Schutzfolie verbleibt zunächst noch als Oberflächenschutz auf dem CFK-Bauteil und wird erst bei Bedarf abgezogen.

### Beispiel 10

### Lackiertes Faser-Verbundbauteil, hergestellt mit der Prepreg-Technologie

Zur Fertigung eines lackierten Faser-Verbundbauteils wird bei der Herstellung des Prepreg-Materials nicht nur die erfindungsgemäß einzusetzende Schutzfolie (beschichtete Polymerfolie) verwendet, sondern auch ein Lackfilm (vorzugsweise als nicht vollständig ausgehärtetes umformbares Folienmaterial), welcher zwischen der Folie und einem unidirektionalem Phenolharz-Prepregmaterial angeordnet ist. Mit Hilfe dieses Prepreg-Aufbaus kann Rollen- oder Tafelware einem beheizten Umformwerkzeug zugeführt werden, in welchem der Verbund in die endgültige Form gebracht und ausgehärtet wird.

Durch die temporäre Schutzfolie wird die Lackoberfläche während der Verarbeitung und ggf. während der Weiterverarbeitung und/oder des Transportes des Bauteils geschützt. Außerdem gewährleistet sie saubere Umformwerkzeuge (ohne Trennmittelaufbau), als auch eine gleichbleibende Lackoberfläche mit einer lösemittelfreien Fertigung. Dies gilt allgemein beim Einsatz des erfindungsgemäßen Verbundes in Kombination mit Lack.

Für die Herstellung des Prepregmaterials wird eine 80 µm dicke TPU-Folie, welche zuvor auf der dem Prepreg zugewandten Seite als Bahnware in einem Niederdruck-Plasmaprozess mit einer 50 nm dicken Beschichtung 2 aus Beispiel 1 ausgestattet worden war, verwendet. Auf diese Beschichtung wird die Lackfolie aufgebracht. Auf die Lackfolie wird das vorimprägnierten Fasermaterial aufgebracht. Dabei können nicht nur unidirektionale Schichten oder Gewebe aufgebracht werden, sondern es kann auch Kurzfasermaterial zur Herstellung (quasi-)isotroper faserverstärkte Kunststoffe beispielsweise durch Aufsprühen aufgebracht werden. Die so entstandene Oberfläche wird in der Regel durch eine Trennfolie oder ein Trennpapier abgedeckt. Sollte das zu fertigende Faserverbund-Bauteil mit nur einer Lage dieses lackhaltigen Halbzeugs gefertigt werden, kann eine weitere Lage der oben beschriebenen beschichteten TPU-Folie verwendet werden.
Nach dem Umformen und Aushärten kann die TPU-Folie zunächst noch als Oberflächenschutz auf dem Faserverbund-Bauteil verbleiben und wird erst bei Bedarf abgezogen. Dabei verbleibt die Beschichtung 2 komplett auf der TPU-Folie. Durch die gemeinsame Aushärtung von Lackfolie und Prepregmaterial im beheizten Umformwerkzeug entsteht ein haftfester Verbund. Oberflächenfehler in der Lackoberfläche durch den Umformungsprozess werden durch die dehnfähige Schutzfolie ebenso wirksam unterdrückt wie klassische Lackierfehler durch Staub oder Ausgasungen aus dem Fasermaterial.

## Patentansprüche

1. Verbund umfassend (i) ein Kunststoffbauteil oder (ii) ein Kunststoffhalbzeug mit einem Schutzschichtsystem, wobei das Schutzschichtsystem eine Kunststofffolie und eine plasmapolymere siliziumorganische Schicht umfasst, die plasmapolymere siliziumorganische Schicht zwischen dem (i) Kunststoffbauteil oder dem (ii) Kunststoffhalbzeug und der Kunststofffolie angeordnet ist und die plasmapolymere siliziumorganische Schicht nach dem Aushärten (i) des Kunststoffbauteils oder des (ii) Kunststoffhalbzeugs an der Kunststofffolie fester haftet als an dem (i) Kunststoffbauteil oder dem (ii) Kunststoffhalbzeug,
wobei die Stoffmengenverhältnisse in der plasmapolymeren siliziumorganischen Schicht gemessen mittels XPS
| | | |
|---|---|---|
| 1,00 | ≤ n(O + N): n(Si) | ≤ 2,20 |
| 1,20 | ≤ n(C) : n(Si) | ≤ 2,00 |
| 0,70 | ≤ n(C): n(O + N) | ≤ 2,00 |
sind und besonders bevorzugt
| | | |
|---|---|---|
| 1,25 | ≤ n(O) : n(Si) | ≤ 2,10 |
| 1,60 | ≤ n(C) : n(Si) | ≤ 2,00 |
| 0,80 | ≤ n(C) : n(O) | ≤ 1,80 |
sind.

2. Verbund nach Anspruch 1, wobei bezogen auf die Summe der Elemente Silicium, Sauerstoff, Stickstoff und Kohlenstoff als 100 Atom-% für die plasmapolymere siliziumorganische Schicht gemessen mittels XPS gilt:
| | |
|---|---|
| Silicium | 17 bis 27 Atom-% |
| (Sauerstoff + Stickstoff) | 26 bis 50 Atom-% |
| Kohlenstoff | 25 bis 50 Atom-% |
und bevorzugt gilt:
| | |
|---|---|
| Silicium | 19 bis 26 Atom-% |
| Sauerstoff | 30 bis 45 Atom-% |
| Kohlenstoff | 33 bis 48 Atom-% |

3. Verbund nach einem der vorangehenden Ansprüche, wobei die plasmapolymere siliziumorganische Schicht eine Schichtdicke von ≤ 2µm besitzt.

4. Verbund nach einem der vorangehenden Ansprüche, wobei die Kunststofffolie aus
- einem thermoplastischen Elastomer, bevorzugt ausgewählt aus der Gruppe bestehend aus thermoplastische Polyesterelastomere (TPE-E); thermoplastische Copolyester(TPC), insbesondere Polyetherester; vernetzte thermoplastische Elastomere auf Olefinbasis (TPE-V / TPV), insbesondere Mischungen aus Polypropylen und Ethylen-Propylen-Dien-Kautschuk (EPDM/PP); thermoplastische Elastomere auf Urethanbasis (TPE-U / TPU); Mischungen aus Naturkautschuk und Polypropylen (NR/PP); Mischungen aus Nitrilkautschuk und Polypropylen (NBR/PP) und Mischungen aus Ethylenvinylacetat und Polyvinylidenchlorid (EVA/PVDC) oder
- einem thermoplastischen Polymer, bevorzugt ausgewählt aus der Gruppe bestehend aus Polyolefin, insbesondere Polymethylpenten (PMP) sowie Polyolefin-Copolymeren; Polyamid, insbesondere Polyamid 6.6 sowie ε-Caprolactam; Polyethylenterephthalat (PET) und Polyimid (PI).

5. Verbund nach einem der vorangehenden Ansprüche, wobei das (i) Kunststoffbauteil oder (ii) Kunststoffhalbzeug zumindest auf der zur plasmapolymeren siliziumorganischen Schicht gerichteten Seite bevorzugt vollständig aus einem Material besteht, ausgewählt aus der Gruppe bestehend aus Duromer; Thermoplast; Matrixharz für Faserverbundkunststoffe, insbesondere auf Epoxidharz-, Polyurethanharz-, Polyesterharz- Vinylesterharz- oder Phenolharzbasis; Kunststoffschaum; Lack insbesondere appliziert als Gelcoat und Klebstoff.

6. Verbund nach einem der vorangehenden Ansprüche umfassend ein Kunstoffbauteil, wobei das Kunststoffbauteil hergestellt ist nach einem Verfahren ausgewählt aus der Gruppe bestehend aus Spritzgießen; Reaction Injection Moulding (RIM); Schäumen; Verfahren zur Herstellung von Faserverbundwerkstoffen, insbesondere auf Basis von Kohlenstofffasern, Glasfasern oder Polymerfasern, bevorzugt (Vakuum-)infusion, Handlaminieren, Injektionsverfahren besonders bevorzugt Resin Transfer Moulding RTM, Nasspressverfahren, Faserspritzen, Prepregverfahren; in-Mould-Lackieren und Laminieren insbesondere zum Verbund mit Holz, Metall oder Kunststoff.

7. Verbund nach einem der vorangehenden Ansprüche, wobei die Kunststofffolie eine Erweichungstemperatur von ≥ 100° C besitzt.

8. Verbund nach einem der Ansprüche 1 bis 5 oder 7, umfassend ein Kunststoffhalbzeug, das noch nicht vollständig ausgehärtet ist.

9. Verbund nach Anspruch 8, wobei der Verbund eine Bahnware, bevorzugt eine wickelbare Bahnware ist.

10. Verbund nach einem der vorangehenden Ansprüche, wobei das Material für das Kunststoffbauteil oder das Kunststoffhalbzeug ein Faserverbundstoff ist oder einen Faserverbundstoff umfasst.

11. Verbund nach einem der vorangehenden Ansprüche, wobei der Verbund an die plasmapolymere siliziumorganische Schicht angrenzend eine Lackschicht umfasst.

12. Verwendung eines Schutzschichtsystems wie in einem der vorangehenden Ansprüche definiert als Trennhilfe zur Form in einem Kunststoffformgebungsprozess.

13. Verfahren zum Herstellen eines Verbundes nach einem der Ansprüche 1 bis 11, umfassend die Schritte:
a) Bereitstellen einer Kunststofffolie, wie in einem der Ansprüche 1 bis 11 definiert,
b) Beschichten der Kunststofffolie mir einer plasmapolymeren siliziumorganischen Schicht, wie in einem der Ansprüche 1 bis 11 definiert und
c) Kontaktieren des Materials für das (i) Kunststoffbauteil oder (ii) Kunststoffhalbzeug im nicht vollständig ausgehärteten Zustand mit der plasmapolymeren siliziumorganischen Schicht.

## Claims

1. A composite comprising (i) a plastics component or (ii) a semifinished plastics product with a protective layer system, where the protective layer system comprises a plastics film and an organosilicon plasma polymer layer, the organosilicon plasma polymer layer is arranged between the (i) plastics component or the (ii) semifinished plastics product and the plastics film and, after the hardening of the (i) plastics component or of the (ii) semifinished plastics product, the organosilicon plasma polymer layer adheres more securely to the plastics film than to the (i) plastics component or the (ii) semifinished plastics product,
where the atomic ratios in the organosilicon plasma polymer layer, measured by means of XPS, are
| | | |
|---|---|---|
| 1.00 | ≤ n(O + N): n(Si) | ≤ 2.20 |
| 1.20 | ≤ n(C) : n(Si) | ≤ 2.00 |
| 0.70 | ≤ n(C): n(O + N) | ≤ 2.00, |
and particularly preferably
| | | |
|---|---|---|
| 1.25 | ≤ n(O) : n(Si) | ≤ 2.10 |
| 1.60 | ≤ n(C) : n(Si) | ≤ 2.00 |
| 0.80 | ≤ n(C) : n(O) | ≤ 1.80. |

2. The composite as claimed in claim 1 where, based on the entirety of the elements silicon, oxygen, nitrogen, and carbon as 100 atom% the following applies to values measured by means of XPS on the organosilicon plasma polymer layer:
| | |
|---|---|
| silicon | from 17 to 27 atom% |
| (oxygen + nitrogen) | from 26 to 50 atom% |
| carbon | from 25 to 50 atom% |
and preferably:
| | |
|---|---|
| silicon | from 19 to 26 atom% |
| oxygen | from 30 to 45 atom% |
| carbon | from 33 to 48 atom% |

3. The composite as claimed in any of the preceding claims, where the thickness of the organosilicon plasma polymer layer is ≤ 2 µm.

4. The composite as claimed in any of the preceding claims, where the plastics film is composed of
- a thermoplastic elastomer, preferably selected from the group consisting of thermoplastic polyester elastomers (TPE-E); thermoplastic copolyesters (TPC), in particular polyetheresters; crosslinked thermoplastic elastomers based on olefins (TPE-V / TPV), in particular mixtures of polypropylene and ethylenepropylene-diene rubber (EPDM/PP); thermoplastic elastomers based on urethanes (TPE-U / TPU); mixtures of natural rubber and polypropylene (NR/PP); mixtures of nitrile rubber and polypropylene (NBR/PP), and mixtures of ethylene-vinyl acetate and polyvinylidene chloride (EVA/PVDC), or
- a thermoplastic polymer, preferably selected from the group consisting of polyolefin, in particular polymethylpentene (PMP), and also polyolefin copolymers; polyamide, in particular nylon-6,6, and also ε-caprolactam; polyethylene terephthalate (PET), and polyimide (PI).

5. The composite as claimed in any of the preceding claims, where the (i) plastics component or (ii) semifinished plastics product is, at least on the side directed toward the organosilicon plasma polymer layer, preferably entirely composed of a material selected from the group consisting of thermoset; thermoplastic; matrix resin for fiber-composite plastics, in particular based on epoxy resin, on polyurethane resin, on polyester resin, on vinyl ester resin, or on phenolic resin; plastics foam; coating material in particular applied as gel coat, and adhesive.

6. The composite as claimed in any of the preceding claims comprising a plastics component, where the plastics component has been produced by a process selected from the group consisting of injection molding; reaction injection molding (RIM); foaming; processes for the production of fiber-composite materials, in particular based on carbon fibers, glass fibers, or polymer fibers, preferably (vacuum) infusion, manual lamination, injection processes, particularly preferably resin transfer molding RTM, liquid resin press molding, pray layup, prepreg processes; in-mold-coating processes, and lamination, in particular for producing a composite with wood, metal, or plastic.

7. The composite as claimed in any of the preceding claims, where the softening point of the plastics film is ≥ 100°C.

8. The composite as claimed in any of claims 1 to 5 or 7, comprising a semifinished plastics product which has not yet entirely hardened.

9. The composite as claimed in claim 8, where the composite is a web product, preferably a windable web product.

10. The composite as claimed in any of the preceding claims, where the material for the plastics component or the semifinished plastics product is a fiber-composite material or comprises a fiber-composite material.

11. The composite as claimed in any of the preceding claims, where the composite comprises a layer of coating material adjacent to the organosilicon plasma polymer layer.

12. The use of a protective layer system as defined in any of the preceding claims as release aid with respect to the mold in a plastics-shaping process.

13. A process for the production of a composite as claimed in any of claims 1 to 11, comprising the steps of:
a) provision of a plastics film as defined in any of claims 1 to 11,
b) coating of the plastics film with an organosilicon plasma polymer layer as defined in any of claims 1 to 11, and
c) bringing the material for the (i) plastics component or (ii) semifinished plastics product in the incompletely hardened state into contact with the organosilicon plasma polymer layer.

## Revendications

1. Composite comprenant (i) un élément en plastique ou (ii) un semi-produit en plastique pourvu d'un système de couche de protection, dans lequel le système de couche de protection comprend un film en plastique et une couche organique à base de silicium et en polymère plasma, la couche organique à base de silicium et en polymère plasma est disposée entre (i) l'élément en plastique ou (ii) le semi-produit en plastique et le film en plastique et la couche organique à base de silicium et en polymère plasma adhère, après le durcissement (i) de l'élément en plastique ou (ii) du semi-produit en plastique, plus solidement au niveau du film en plastique qu'au niveau (i) de l'élément en plastique ou (ii) du semi-produit en plastique,
dans lequel les rapports molaires sont, selon une mesure effectuée au moyen d'XPS, dans la couche organique à base de silicium et en polymère plasma
| |
|---|
| 1,00 ≤ n(O + N) : n(Si) ≤ 2,20 |
| 1,20 ≤ n(C) : n(Si) ≤ 2,00 |
| 0,70 ≤ n(C) : n(O + N) ≤ 2,00 |
et de manière préférée sont
| |
|---|
| 1,25 ≤ n(O) : n(Si) ≤ 2,10 |
| 1,60 ≤ n(C) : n(Si) ≤ 2, 00 |
| 0,80 ≤ n(C) : n(O) ≤ 1,80 |

2. Composé selon la revendication 1, dans lequel s'applique par rapport à la somme des éléments silicium, oxygène, azote et carbone égale à 100 % en atomes pour la couche organique à base de silicium et en polymère plasma, selon une mesure effectuée au moyen d'XPS :
| | |
|---|---|
| silicium | 17 à 27 % en atomes |
| (oxygène + azote) | 26 à 50 % en atomes |
| carbone | 25 à 50 % en atomes. |
et que s'applique de manière préférée :
| | |
|---|---|
| silicium | 19 à 26 % en atomes |
| (oxygène + azote) | 30 à 45 % en atomes |
| carbone | 33 à 48 % en atomes. |

3. Composite selon l'une quelconque des revendications précédentes, dans lequel la couche organique à base de silicium et en polymère plasma possède une épaisseur de couche ≤ 2 µm.

4. Composite selon l'une quelconque des revendications précédentes, dans lequel le film en plastique est composé
- d'un élastomère thermoplastique, choisi de manière préférée parmi le groupe constitué d'élastomères polyesters thermoplastiques (TPE-E) ; de copolyesters thermoplastiques (TPC), en particulier le polyetherester ; d'élastomères thermoplastiques réticulés à base d'oléfine (TPE-V/TPV), en particulier des mélanges de polypropylène et de caoutchouc d'éthylène-propylène-diène (EPDM/PP) ; d'élastomères thermoplastiques à base d'uréthane (TPE-U/TPU) ; de mélanges composés de caoutchouc naturel et de polypropylène (NR/PP) ; de mélanges composés de caoutchouc de nitrile et de polypropylène (NBR/PP) et de mélanges composés d'éthylène-acétate de vinyle et chlorure de polyvinylidène (EVA/PVDC) ou
- d'un polymère thermoplastique, choisi de manière préférée parmi le groupe constitué de la polyoléfine, en particulier le polyméthylpentène (PMP) ainsi que les copolymères de polyoléfine ; du polyamide, en particulier le polyamide 6.6 ainsi que l'epsilon-caprolactame ; du polyéthylène téréphtalate (PET) et du polyimide (PI).

5. Composite selon l'une quelconque des revendications précédentes, dans lequel (i) l'élément en plastique ou (ii) le semi-produit en plastique est constitué, au moins sur le côté orienté vers la couche organique à base de silicium et en polymère plasma, de manière préférée totalement d'un matériau choisi parmi le groupe constitué d'une matière thermodurcissable ; d'une matière thermoplastique ; d'une résine de matrice pour des matières plastiques composites à base de fibres, en particulier à base de résine époxy, de résine de polyuréthane, de résine de polyester, de résine d'ester vinylique ou de résine phénolique ; d'une mousse en plastique ; d'une peinture appliquée en particulier sous la forme d'un revêtement gélifié et d'une colle.

6. Composite selon l'une quelconque des revendications précédentes, comprenant un élément en plastique, dans lequel l'élément en plastique est fabriqué selon un procédé choisi parmi le groupe constitué de la coulée par injection ; du moulage par réaction RIM ; du moussage ; des procédés de fabrication de matériaux composites à base de fibres, en particulier à base de fibres de carbone, de fibres de verre ou de fibres polymères, de manière préférée l'infusion (sous vide), le laminage manuel, les procédés d'injection, en particulier de manière préférée le procédé RTM (moulage par transfert de résine), le procédé d'application de pression par voie humide, l'injection de fibres, le procédé de production de prépreg ; de la mise en peinture dans le moule et du laminage pour obtenir en particulier le composite avec du bois, du métal ou du plastique.

7. Composite selon l'une quelconque des revendications précédentes, dans lequel le film en plastique possède une température de ramollissement ≥ 100 °C.

8. Composite selon l'une quelconque des revendications 1 à 5 ou 7, comprenant un semi-produit en plastique, qui n'est pas durci encore complètement.

9. Composite selon la revendication 8, dans lequel le composite est une bande continue, de manière préférée une bande continue pouvant être enroulée.

10. Composite selon l'une quelconque des revendications précédentes, dans lequel le matériau pour l'élément en plastique ou pour le semi-produit en plastique est une matière composite à base de fibres ou comprend une matière composite à base de fibres.

11. Composite selon l'une quelconque des revendications précédentes, dans lequel le composite comprend une couche de peinture adjacente à la couche organique à base de silicium et en polymère plasma.

12. Utilisation d'un système de couche de protection tel que défini dans l'une quelconque des revendications précédentes, en tant qu'aide à la séparation dans un processus de mise en forme de plastique.

13. Procédé servant à fabriquer un composite selon l'une quelconque des revendications 1 à 11, comprenant les étapes suivantes consistant à :
a) fournir un film en plastique tel que défini dans l'une quelconque des revendications 1 à 11 ;
b) revêtir le film en plastique d'une couche organique à base de silicium et en polymère plasma telle que définie dans l'une quelconque des revendications 1 à 11 et
c) mettre en contact le matériau pour (i) l'élément en plastique ou (ii) le semi-produit en plastique, dans l'état pas encore complètement durci, avec la couche organique à base de silicium et en polymère plasma.
